# FASCICULE DE BREVET EUROPEEN

(11) **EP 4 367 084 B1**
(45) Date de publication et mention de la délivrance du brevet: **06.08.2025**
(21) Numéro de dépôt: 22750851.2
(22) Date de dépôt: 30.06.2022
(51) Int. Cl.: C04B 41/50, C04B 41/52, C04B 41/00, C04B 41/87, C04B 41/89, F01D 5/28, C04B 111/00

(54) **BARRIERE ENVIRONNEMENTALE POUR UN SUBSTRAT COMPRENANT DU SILICIUM LIBRE**
UMWELTBARRIERE FÜR EIN SUBSTRAT MIT FREIEM SILICIUM
ENVIRONMENTAL BARRIER FOR A SUBSTRATE COMPRISING FREE SILICON

(30) Priorité: 07.07.2021 FR 2107337
(43) Date de publication de la demande: 15.05.2024
(73) Titulaire: Safran Ceramics, 33185 Le Haillan (FR); UNIVERSITE DE BORDEAUX, 33000 Bordeaux (FR); Centre National de la Recherche Scientifique, 75016 Paris (FR)
(72) Inventeur: MOURET, Thibault, 33000 BORDEAUX (FR); REBILLAT, Francis, 33600 PESSAC (FR); MAILLE, Laurence, 33000 BORDEAUX (FR); ARNAL, Simon, 77550 MOISSY-CRAMAYEL (FR); BOUILLON, Eric, 77550 MOISSY-CRAMAYEL (FR)
(74) Mandataire: Cabinet Beau de Loménie
(86) Numéro de dépôt international: PCT/FR2022/051305
(87) Numéro de publication internationale: WO 2023/281186

(56) Documents cités:
- US-A1- 2018 037 515

## Description

### Domaine Technique

L'invention concerne le domaine des matériaux composites à matrice céramique (CMC) et plus précisément celui des barrières environnementales pouvant être appliquées sur de tels matériaux.

### Technique antérieure

Les matériaux CMC présentent de bonnes propriétés mécaniques les rendant aptes à constituer des éléments de structures et conservent avantageusement ces propriétés à températures élevées.

Ces matériaux CMC peuvent toutefois se dégrader lorsqu'ils sont utilisés à des températures élevées et dans un environnement corrosif, comme c'est le cas lorsqu'ils sont présents dans des turbines aéronautiques. Lorsque la pièce en CMC comprend une matrice de carbure de silicium (SiC), la corrosion du CMC résulte en l'oxydation du SiC en silice, qui en présence de vapeur d'eau se volatilise sous forme d'hydroxydes Si(OH)₄. Les phénomènes de corrosion entraînent une dégradation prématurée du CMC. Des revêtements de barrière environnementale (aussi appelée « EBC » de l'anglais « Environnemental Barrier Coating ») ont par conséquent été développés afin de protéger les matériaux CMC de la corrosion à haute température. Comme exemple de barrière environnementale utilisable, on peut par exemple citer des ensembles multicouches comprenant une couche de liaison en silicium et une couche d'un silicate de terre rare (de type RE₂Si₂O₇ ou RE₂SiO₅, par exemple Y₂Si₂O₇).

Ces barrières environnementales sont très généralement obtenues par projection thermique de poudre, ou par voie liquide, généralement suivie d'un traitement thermique de frittage/densification.

Si les barrières environnementales ainsi obtenues offrent de nombreux avantages, il reste néanmoins des situations dans lesquelles elles sont difficilement utilisables. Par exemple, dans le cas où une étanchéité très grande de la barrière est souhaitée, il est généralement recommandé d'augmenter la température de frittage. Malheureusement, une telle augmentation de la température de frittage n'est pas compatible de substrats comprenant du silicium libre car de tels substrats se décomposent thermiquement lorsque la température devient supérieure à 1400°C.

La méthode alors classiquement envisagée pour diminuer la température de frittage, et permettre d'augmenter l'étanchéité de la barrière environnementale sans détériorer le substrat, est d'ajouter à la barrière environnementale un agent de frittage, par exemple MgO ou Fe₂O₃. Néanmoins, ces agents de frittage ne sont pas compatibles des barrières possédant des capacités d'auto-cicatrisation, qui sont particulièrement souhaitables pour certaines applications. En effet, les composés MgO et Fe₂O₃ pourrait modifier la stabilité de la phase liquide d'une barrière environnementale auto-cicatrisante. De plus, leur rôle d'aide au frittage est diminué si la porosité de la barrière environnementale est diminuée ce qui est généralement le cas, quand une très grande étanchéité de la barrière environnementale est souhaitée.

Lorsque des capacités d'auto-cicatrisation sont souhaitées pour des barrières environnementales, il est proposé d'utiliser de l'alumine Al₂O₃ comme agent de frittage. Malheureusement, cette solution n'est pas applicable pour des barrières environnementales comprenant du silicate d'ytterbium Yb₂Si₂O₇, car la température de formation d'une phase liquide pour des compositions d'alumine et de silicate d'ytterbium reste supérieure aux températures admissibles pour des substrats comprenant du silicium libre.

Or, pour certaines applications, les barrières environnementales utilisant du silicate d'ytterbium (Yb₂SiO₅ et/ou Yb₂Si₂O₇), plutôt que du silicate d'yttrium (Y₂SiO₅ et/ou Y₂Si₂O₇) par exemple, car il est démontré que de telles barrières présentent une meilleure résistance à la récession et une moindre diffusion ionique.

Ainsi donc, il demeure un besoin pour une barrière environnementale comprenant du silicate d'ytterbium (Yb₂SiO₅ et/ou Yb₂Si₂O₇) et présentant à la fois une très grande densité et des capacités d'auto-cicatrisation pouvant être appliquées pour des substrats comprenant du silicium libre.

US2018037515A1 décrit une pièce revêtue comprenant une couche d'accroche et une couche supérieure sur un substrat en céramique à base de silicium ou en matériau composite à matrice céramique SiC-SiC, ladite couche supérieure incluant une première couche composée d'une phase mixte de disilicate de terre rare et de monosilicate de terre rare, le disilicate de terre rare étant une solution solide (Y₁₋ₐLn₁ₐ)₂Si₂O₇ (Ln₁ étant choisi parmi Nd, Sm, Eu, et Gd, a étant supérieur ou égal à 0.1 et inférieur ou égal à 0.5 si Ln₁ est Nd, Sm, ou Eu, et a est supérieur ou égal à 0.2 et inférieur ou égal à 0.5 si Ln₁ est Gd), et le monosilicate de terre rare étant Y₂SiO₅ ou une solution solide (Y_{1-b}Ln_{1'b})₂SiO₅ (Ln₁, étant choisi parmi Nd, Sm, Eu, et Gd, et b étant supérieur ou égal à 0 inférieur ou égal à 0.5).

### Exposé de l'invention

L'invention vise précisément à répondre au besoin décrit ci-dessus.

Elle concerne une pièce comprenant un substrat en matériau composite à matrice céramique, le substrat comprenant du silicium, la pièce comprenant en outre une barrière environnementale formée sur au moins une surface du substrat,
la pièce étant caractérisée en ce que la barrière environnementale comprend au moins un composé choisi parmi Yb_{2-2γ}Gd_{2γ}SiO₅, Yb_{2-2γ}Gd_{2γ}Si₂O₇, où γ est compris entre 0,05 et 0,15,
et en ce que la barrière environnementale comprend en outre de l'alumine Al₂O₃, la teneur molaire en alumine étant comprise entre 5 et 15 % par rapport à la composition totale de la barrière environnementale.

Une telle pièce permet une excellente résistance à l'oxydation grâce à la présence du silicate d'ytterbium tout en permettant l'utilisation d'un substrat ayant du silicium libre.

La substitution d'une partie de l'ytterbium par du gadolinium dans la barrière environnementale conjointement à la présence de l'alumine permet à la barrière environnementale d'avoir une part de phase liquide lorsqu'elle est portée à une température supérieure à 1300°C.

La présence de cette phase liquide permet, au moment de la formation de la barrière environnementale par traitement thermique, d'atteindre une densification très importante, grâce à la phase liquide qui favorise le réarrangement granulaire. La grande densité de la barrière environnementale lui confère une excellente imperméabilité aux espèces oxydantes et corrosives, et permet une bonne protection du substrat.

De plus, lors de son utilisation, la présence de la phase liquide dans la barrière environnementale lui permet, si la température est supérieure à 1300°C, de réparer des endommagements de fissuration et d'assurer la relaxation des contraintes thermomécaniques qui apparaissent dans le domaine d'utilisation. Ces propriétés d'auto-cicatrisation de la barrière environnementale dans le domaine de fonctionnement permettent d'éviter la formation de fissure, et assurent donc une meilleure longévité à la pièce revêtue.

Dans un mode de réalisation, la pièce comprend en outre une couche d'accroche comprenant du silicium présente entre la surface du substrat et la barrière environnementale.

La couche d'accroche permet, d'une part d'améliorer l'accroche de la couche de silicate de terre rare et, d'autre part de former une couche de silice protectrice, dont la faible perméabilité à l'oxygène participe à la protection du CMC contre l'oxydation.

Dans un mode de réalisation, le substrat est une pièce en matériau composite dont la matrice comprend du carbure de silicium, voire un matériau composite dont le renfort fibreux et la matrice comprennent du carbure de silicium.

Dans un mode de réalisation, la barrière environnementale peut comprendre conjointement les composés Yb_{2-2γ}Gd_{2γ}SiO₅, Yb_{2-2γ}Gd_{2γ}Si₂O₇, où γ est compris entre 0,05 et 0,15. La barrière environnementale comprend alors un monosilicate de terre rare et un disilicate de terre rare, ladite terre rare étant de l'ytterbium en partie substituée par du gadolinium.

Dans ce mode de réalisation, la composition de la barrière environnementale est choisie dans un domaine du diagramme ternaire Yb₂O₃-Al₂O₃-SiO₂ entre le monosilicate d'ytterbium, le disilicate d'ytterbium et les grenats d'ytterbium-aluminium, étant entendu qu'une partie de l'ytterbium est substituée par du gadolinium.

Le choix de la composition précise de la barrière environnementale dans ce domaine du diagramme ternaire, et notamment la teneur en alumine ainsi que le taux de substitution du gadolinium à la place de l'ytterbium permet de choisir précisément la quantité de phase liquide présente dans la barrière environnementale, ce qui confère à la barrière les propriétés d'auto-cicatrisation souhaitées.

Dans un autre mode de réalisation, la barrière environnementale ne comprend qu'un des composés choisi parmi Yb_{2-2γ}Gd_{2γ}SiO₅, Yb_{2-2γ}Gd_{2γ}Si₂O₇, où γ est compris entre 0,05 et 0,15. Dans un mode de réalisation, les seules espèces de la couche de barrière environnementale comprenant une terre rare sont un disilicate d'ytterbium et un disilicate de gadolinium.

Par exemple, la couche de barrière environnementale peut avoir une composition se situant, dans le diagramme ternaire Yb₂O₃-Al₂O₃-SiO₂, sur l'isoplèthe allant du disilicate d'ytterbium à la mullite, étant entendu qu'une partie de l'ytterbium est substituée par du gadolinium.

Sans vouloir être liés par la théorie, les inventeurs sont d'avis que le taux de substitution du gadolinium à la place de l'ytterbium permet de choisir précisément la quantité de phase liquide présente dans la barrière environnementale, ce qui confère à la barrière les propriétés d'auto-cicatrisation souhaitées.

Dans un mode de réalisation, la barrière environnementale présente un taux de densification supérieur ou égal à 98 %. Un tel taux peut avantageusement être atteint pour une barrière environnementale selon l'invention à des températures compatible d'un substrat comprenant du silicium libre.

Un tel taux de densification permet une barrière plus imperméable aux gaz que les barrières environnementales de l'art antérieur, et améliore donc le caractère protecteur de la barrière environnementale.

Dans un mode de réalisation, le substrat peut être une pièce de turbomachine aéronautique, par exemple une pièce de turbine haute pression ou une pièce de turbine basse pression. Par exemple, la pièce peut être un distributeur, une tuyère, une paroi de chambre de combustion, un secteur d'anneau de turbine, une aube de turbomachine ou encore une partie de l'une de ces pièces.

Selon un autre de ses aspects, l'invention concerne un procédé pour protéger un substrat dont une partie adjacente à une surface est en un matériau comprenant du silicium, lors d'une utilisation à haute température en milieu oxydant et humide, par formation sur la surface du substrat d'une barrière environnementale,
caractérisé en ce que l'on forme une barrière environnementale qui comprend au moins un composé choisi parmi Yb_{2-2γ}Gd_{2γ}SiO₅, Yb_{2-2γ}Gd_{2γ}Si₂O₇ où γ est compris entre 0,05 et 0,15, et de l'alumine (Al₂O₃) en une teneur molaire comprise entre 5 et 15 % par rapport à la composition totale de la barrière environnementale,
la barrière environnementale conservant une phase solide majoritaire jusqu'à au moins 1400°C et présentant une phase liquide à une température supérieure ou égale à 1300°C, de sorte que la quantité de phase liquide assure à la barrière une capacité d'auto-cicatrisation pour une température d'utilisation supérieure ou égale à 1300°C.

Un tel procédé permet la protection d'un substrat comprenant du silicium au moyen d'une barrière environnementale auto-cicatrisante. En effet, la quantité de phase liquide permet d'assurer que la barrière environnementale soit capable de reboucher les fissures qui pourraient éventuellement apparaitre lors de l'utilisation de la pièce. De plus, le procédé de l'invention reste compatible d'un substrat comprenant du silicium car la barrière environnementale présente une phase liquide à une température inférieure à 1400°C.

Dans un mode de réalisation, la formation de la barrière environnementale comprend une étape de frittage d'une poudre d'oxyde d'ytterbium (Yb₂O₃), d'une poudre d'oxyde de gadolinium (Gd₂O₃), d'une poudre d'alumine (Al₂O₃) et d'une poudre de silice (SiO₂) à une température comprise entre 1300°C et 1400°C, la proportion des poudres étant choisies de sorte à obtenir une pièce telle que décrite ci-dessus.

Le frittage permet d'obtenir une densification très élevée de la barrière environnementale. En effet, la phase liquide dans la barrière environnementale favorise le réarrangement granulaire ce qui permet d'augmenter la densification comparativement à des barrières environnementales ne comprenant pas cette phase liquide.

Dans un mode de réalisation, le procédé comprend en outre une étape d'obtention d'une couche d'accroche comprenant du silicium à la surface du substrat, antérieure à la formation de la barrière environnementale.

### Brève description des dessins

[Fig. 1] La figure 1 représente de manière très schématique un mode de réalisation de l'invention.
[Fig. 2] La figure 2 représente de manière schématique un diagramme ternaire Yb₂O₃-Al₂O₃-SiO₂.

### Description des modes de réalisation

La description qui suit se rapporte à des modes de réalisation particuliers de l'invention, illustrés pour en favoriser la compréhension. Ces modes de réalisation particuliers ne doivent pas être interprétés de manière limitative de l'invention.

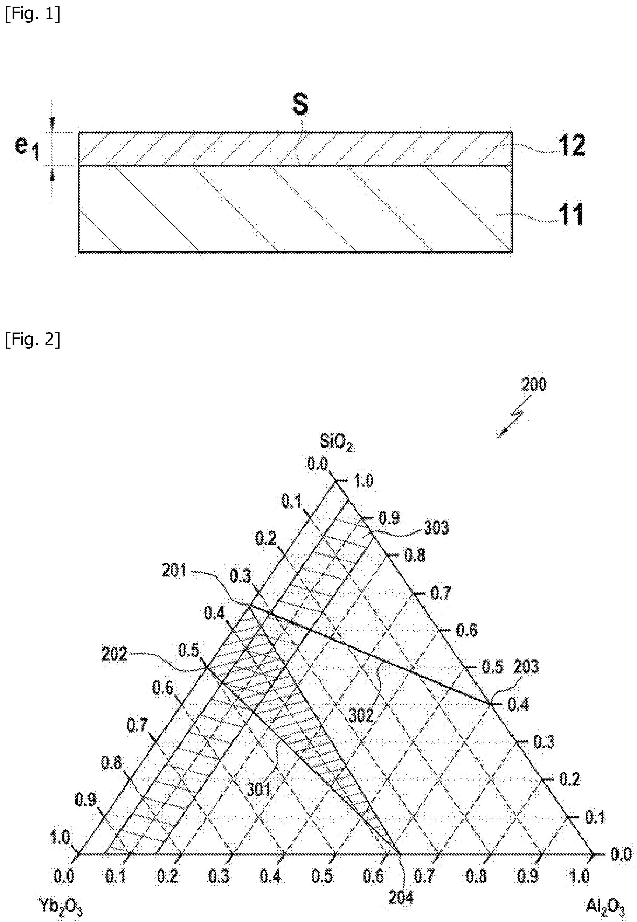

La figure 1 montre très schématiquement un substrat 11 muni d'une barrière environnementale 12 sur sa surface S selon un mode de réalisation.

Le substrat 11 en matériau composite à matrice céramique comprenant du silicium comprend un renfort fibreux qui peut être en fibres de carbone ou en fibres céramiques, en fibres de carbure de silicium SiC par exemple. Les fibres de SiC peuvent ou non être revêtues d'une mince couche d'interphase, par exemple en carbone pyrolytique (PyC), en nitrure de bore (BN) ou en carbone dopé au bore (BC, avec 5 % atomiques à 20%% atomiques de bore, le complément étant du carbone). Le renfort fibreux est densifié par une matrice qui comprend du silicium. Par exemple, la matrice peut être du carbure de silicium SiC.

Dans un mode de réalisation préféré, le substrat 11 est imprégné par la matrice au moyen de la méthode d'infiltration de silicium à l'état fondu (en anglais « melt infiltration ») au cours de laquelle une poudre, par exemple de carbone ou de céramique, est dispersée dans les porosités du renfort fibreux, l'ensemble étant ensuite infiltré par du silicium liquide pour réagir avec la poudre dispersée et former la matrice directement dans les porosités du renfort fibreux.

La barrière environnementale 12 est formée sur toute la surface externe du substrat 11 ou sur une partie seulement de cette surface, par exemple si seulement une partie du substrat 11 doit être protégée.

Dans un mode de réalisation, la barrière environnementale 12 peut être déposée directement au contact de la surface externe du substrat.

Comme décrit plus haut, la barrière environnementale 12 a une composition choisie de sorte qu'elle présente des propriétés auto-cicatrisantes.

Dans un mode de réalisation, une couche d'accroche, non représentée, peut être formée entre le substrat 11 et la barrière environnementale 12. La couche d'accroche comprend du silicium, et peut être par exemple mullite (3Al₂O₃.2SiO₂).

La couche d'accroche peut être obtenue par des méthodes connues en tant que telles.

Dans un mode de réalisation, la couche d'accroche peut être formée directement au contact du substrat 11.

Dans un mode de réalisation, la barrière environnementale 12 peut être formée directement au contact de la couche d'accroche.

La figure 2 décrit le diagramme ternaire Yb₂O₃-Al₂O₃-SiO₂ 200, et repère les compositions et les domaines d'intérêt pour la présente invention.

Figurent notamment sur ce diagramme ternaire 200 :
- Le monosilicate d'ytterbium 202,
- Le disilicate d'ytterbium 201,
- La mullite 203 ; et
- Le grenat d'ytterbium aluminium 204.

De plus, le domaine 301 correspond au domaine s'étendant entre le monosilicate d'ytterbium 202, le disilicate d'ytterbium 201, et le grenat d'ytterbium aluminium 204.

La droite 302 est l'isoplèthe s'étendant entre le disilicate d'ytterbium 201 et la mullite 203.

Le domaine 303 correspond aux compositions dont la teneur en alumine est comprise entre 5 et 15 %.

Comme décrit plus haut, la barrière environnementale 12 comprend un composé choisi parmi Yb_{2-2γ}Gd_{2γ}SiO₅ et Yb_{2-2γ}Gd_{2γ}Si₂O₇, où γ est compris entre 0,05 et 0,15, et de l'alumine Al₂O₃, la teneur molaire en alumine étant comprise entre 5 et 15 % par rapport à la composition totale de la barrière environnementale.

La formulation Yb_{2-2γ}Gd_{2γ}SiO₅, et respectivement Yb_{2-2γ}Gd_{2γ}Si₂O₇, où γ est compris entre 0,05 et 0,15 s'entend comme un mono-silicate d'ytterbium, respectivement un disilicate d'ytterbium, pour lequel une partie de l'ytterbium a été remplacée par du gadolinium.

Les inventeurs ont en effet constaté que la substitution d'une partie de l'ytterbium par du gadolinium permet de favoriser la présence de phase liquide dans la barrière environnementale.

Il est important de choisir précisément la composition de la barrière environnementale, de sorte que la quantité de phase liquide soit choisie de sorte d'une part qu'elle ne soit pas trop importante, car elle risquerait alors d'être dégradée rapidement par un flux trop important de gaz chaud, et d'autre part qu'elle soit suffisamment importante afin de permettre l'obtention de propriétés auto-cicatrisantes souhaitée.

Par exemple, la composition de la barrière environnementale peut être choisie de sorte que la quantité de phase liquide soit comprise entre 5 et 40% en masse par rapport à la masse totale de la barrière environnementale pour la température de fonctionnement, par exemple pour une température comprise entre 1350°C et 1400°C.

Dans un mode de réalisation, la substitution d'une partie de l'ytterbium par du gadolinium s'effectue en introduisant, dès la formation de la barrière environnementale, la quantité souhaitée de gadolinium sous la même forme que l'ytterbium.

Par exemple, le gadolinium peut être présent de sorte que le rapport entre la quantité molaire d'ytterbium et celle de gadolinium soit compris entre 85/15 et 95/5, voire comprise entre 86/14 et 90/10.

Dans une barrière environnementale selon l'invention, de l'alumine est présente en une teneur molaire comprise entre 5 et 15 % par rapport à la composition totale de la barrière environnementale.

Il est entendu par cette formulation que c'est la teneur équivalente en alumine qui est comprise entre 5 et 15 %. En d'autres termes la composition de la barrière environnementale est située, dans le diagramme ternaire Yb₂O₃-Al₂O₃-SiO₂ 200, dans le domaine 303 correspondant à une concentration en alumine comprise entre 5 et 15 %. Par exemple, si la barrière comprend un grenat d'ytterbium aluminium 204, alors il sera entendu que la barrière comprend de l'alumine.

Dans un mode de réalisation, la barrière comprend de l'alumine sous la forme Al₂O₃.

Dans un mode de réalisation, les deux composés Yb_{2-2γ}Gd_{2γ}SiO₅ et Yb_{2-2γ}Gd_{2γ}Si₂O₇ sont présents conjointement dans la barrière environnementale.

Dans ce mode de réalisation, la composition de la barrière environnementale est alors située dans le domaine du diagramme ternaire Yb₂O₃-Al₂O₃-SiO₂ 200 entre le monosilicate d'ytterbium 202, le disilicate d'ytterbium 201 et les grenats d'ytterbium-aluminium 204, étant entendu que la teneur molaire en alumine est comprise entre 5 et 15 %.

Dans un mode de réalisation, la barrière environnementale ne comprend que l'un des deux composés choisis parmi Yb_{2-2γ}Gd_{2γ}SiO₅ et Yb_{2-2γ}Gd_{2γ}Si₂O₇, et de préférence ne comprend que du Yb_{2-2γ}Gd_{2γ}Si₂O₇, où γ est compris entre 0,05 et 0,15, et de l'alumine Al₂O₃, la teneur molaire en alumine étant comprise entre 5 et 15 % par rapport à la composition totale de la barrière environnementale.

Par exemple, dans ce mode de réalisation, la composition de la barrière environnementale se situe, dans le diagramme ternaire Yb₂O₃-Al₂O₃-SiO₂ 200, sur l'isoplèthe 203 allant du disilicate d'ytterbium 201 à la mullite 203.

Cela signifie que la composition de la barrière environnementale comprend un mélange binaire de ces deux phases.

Il est toujours entendu qu'une partie de l'ytterbium est substituée par du gadolinium comme indiqué plus haut.

Dans ce mode de réalisation, la barrière environnementale est alors préparée facilement, par exemple à partir d'une poudre comprenant du disilicate d'ytterbium, d'une poudre contenant du disilicate de gadolinium et de mullite.

Dans un mode de réalisation, la barrière environnementale s'étend, dans une direction perpendiculaire à la surface du substrat, sur une épaisseur e1 comprise entre 50 µm et 100 µm.

Dans un mode de réalisation, la barrière environnementale n'est pas recouverte. Ce mode de réalisation est particulièrement avantageux lorsque la barrière environnementale suffit, seule, à conférer au substrat une résistance suffisante pour l'environnement auquel il est confronté.

Le procédé d'obtention de la couche de barrière environnementale est à présent décrit.

Si elle est présente, la couche d'accrochage peut être obtenue d'une manière connue en tant que telle, par exemple par projection thermique d'un mélange de poudre.

La barrière environnementale est ensuite créée à la surface du substrat, ou le cas échéant à la surface de la couche d'accroche.

La barrière environnementale peut être créée par un frittage d'une pluralité de poudres comprenant les éléments composant la barrière environnementale.

Dans un mode de réalisation, les poudres de la pluralité de poudres peuvent être choisies parmi : une poudre d'oxyde d'ytterbium, une poudre d'oxyde de gadolinium, une poudre de monosilicate d'ytterbium, une poudre de disilicate d'ytterbium, une poudre de monosilicate de gadolinium, une poudre de disilicate de gadolinium, une poudre d'alumine, une poudre de mullite, une poudre de grenat d'ytterbium-aluminium, une poudre de grenat de gadolinium-aluminium, une poudre de silice.

Dans un mode de réalisation préféré, la barrière environnementale est obtenue par une étape de frittage d'une poudre d'oxyde d'ytterbium (Yb₂O₃), d'une poudre d'oxyde de gadolinium (Gd₂O₃), d'une poudre d'alumine (Al₂O₃) et d'une poudre de silice (SiO₂) à une température comprise entre 1300°C et 1400°C, la proportion des poudres étant choisies de sorte à obtenir une pièce telle que décrite ci-dessus.

Bien entendu, le choix de la quantité précise de poudre sera fait pour obtenir la composition souhaitée pour la barrière environnementale.

Les poudres peuvent, par exemple, être déposées par une méthode de projection thermique de poudres solides.

Les poudres déposées peuvent ensuite être frittées à une température comprise entre 1300°C et 1400°C pour obtenir une excellente densification de la barrière environnementale tout en garantissant l'intégrité du substrat comprenant du silicium libre.

Comme décrit plus haut, la composition de la barrière environnementale conforme à ce qui est décrit permet d'obtenir une phase liquide lors du traitement initial de frittage qui permet l'augmentation de la densité de la barrière comparativement à des barrières de l'art antérieur.

De plus, la composition permet de conférer à la barrière des capacités d'auto-cicatrisation, car l'élévation de la température en fonctionnement permettra la formation de la phase liquide qui permettra un rebouchage plus aisé des fissures et également une meilleure relaxation des contraintes thermomécaniques en fluage.

Ainsi, le procédé décrit permet l'obtention d'une couche de barrière environnementale comprenant un silicate d'ytterbium dont les conditions d'obtention sont compatibles d'un substrat comprenant du silicium libre.

## Revendications

1. Pièce comprenant un substrat (11) en matériau composite à matrice céramique, le substrat comprenant du silicium, la pièce comprenant en outre une barrière environnementale (12) formée sur au moins une surface (S) du substrat,
la pièce étant **caractérisée en ce que** la barrière environnementale comprend au moins un composé choisi parmi Yb_{2-2γ}Gd_{2γ}SiO₅ et Yb_{2-2γ}Gd_{2γ}Si₂O₇, où γ est compris entre 0,05 et 0,15,
et **en ce que** la barrière environnementale comprend en outre de l'alumine Al₂O₃, la teneur molaire en alumine étant comprise entre 5 et 15 % par rapport à la composition totale de la barrière environnementale.

2. Pièce selon la revendication 1, comprenant en outre une couche d'accroche comprenant du silicium présente entre la surface (S) du substrat (11) et la barrière environnementale (12).

3. Pièce selon la revendication 1 ou 2, dans laquelle le substrat (11) est une pièce en matériau composite dont la matrice comprend du carbure de silicium.

4. Pièce selon la revendication 1 à 3, dans laquelle la barrière environnementale (12) comprend conjointement les composés Yb_{2-2γ}Gd_{2γ}SiO₅, Yb_{2-2γ}Gd_{2γ}Si₂O₇, où γ est compris entre 0,05 et 0,15.

5. Pièce selon la revendication 1 à 3, dans laquelle la barrière environnementale (12) ne comprend qu'un des composés choisi parmi Yb_{2-2γ}Gd_{2γ}SiO₅, Yb_{2-2γ}Gd_{2γ}Si₂O₇ où γ est compris entre 0,05 et 0,15.

6. Pièce selon l'une quelconque des revendications 1 à 5, dans laquelle la barrière environnementale (12) présente un taux de densification supérieur ou égal à 98 %.

7. Procédé pour protéger un substrat (11), dont une partie adjacente à une surface (S) est en un matériau comprenant du silicium, lors d'une utilisation à haute température en milieu oxydant et humide, par formation sur la surface du substrat d'une barrière environnementale (12),
**caractérisé en ce que** l'on forme une barrière environnementale qui comprend au moins un composé choisi parmi Yb_{2-2γ}Gd_{2γ}SiO₅, Yb_{2-2γ}Gd_{2γ}Si₂O₇ où γ est compris entre 0,05 et 0,15, et de l'alumine (Al₂O₃) en une teneur molaire comprise entre 5 et 15 % par rapport à la composition totale de la barrière environnementale,
la barrière environnementale conservant une phase solide majoritaire jusqu'à au moins 1400°C et présentant une phase liquide à une température supérieure ou
égale à 1300°C, de sorte que la quantité de phase liquide assure à la barrière une capacité d'auto-cicatrisation pour une température d'utilisation supérieure ou égale à 1300°C.

8. Procédé selon la revendication 7, dans lequel la formation de la barrière environnementale (12) comprend une étape de frittage d'une poudre d'oxyde d'ytterbium (Yb₂O₃), d'une poudre d'oxyde de gadolinium (Gd₂O₃), d'une poudre d'alumine (Al₂O₃) et d'une poudre de silice (SiO₂) à une température comprise entre 1300°C et 1400°C, la proportion des poudres étant choisies de sorte à obtenir une pièce selon l'une quelconque des revendications 1 à 6.

9. Procédé selon la revendication 7 ou 8, comprenant en outre une étape d'obtention d'une couche d'accroche comprenant du silicium à la surface (S) du substrat (11), antérieure à la formation de la barrière environnementale (12).

## Patentansprüche

1. Werkstück, umfassend ein Substrat (11) aus einem Verbundmaterial mit keramischer Matrix, das Substrat umfassend Silizium, das Werkstück ferner umfassend eine Umweltbarriere (12), die auf mindestens einer Oberfläche (S) des Substrats gebildet ist,
wobei das Werkstück **dadurch gekennzeichnet ist, dass** die Umweltbarriere mindestens eine Verbindung umfasst, die ausgewählt ist aus Yb_{2-2γ}Gd_{2γ}SiO₅ und Yb_{2-2γ}Gd_{2γ}Si₂O₇, wobei γ im Bereich von 0,05 bis 0,15 liegt,
und dass die Umweltbarriere ferner Aluminiumoxid Al₂O₃ umfasst, wobei der molare Gehalt an Aluminiumoxid zwischen 5 und 15 %, bezogen auf die Gesamtzusammensetzung der Umweltbarriere, liegt.

2. Werkstück nach Anspruch 1, ferner umfassend eine Haftschicht, die Silizium umfasst, die zwischen der Oberfläche (S) des Substrats (11) und der Umweltbarriere (12) vorhanden ist.

3. Werkstück nach Anspruch 1 oder 2, wobei das Substrat (11) ein Werkstück aus Verbundmaterial ist, dessen Matrix Siliziumkarbid umfasst.

4. Werkstück nach Anspruch 1 bis 3, wobei die Umweltbarriere (12) gemeinsam die Verbindungen Yb_{2-2γ}Gd_{2γ}SiO₅, Yb_{2-2γ}Gd_{2γ}Si₂O₇ umfasst, wobei γ im Bereich von 0,05 bis 0,15 liegt.

5. Werkstück nach Anspruch 1 bis 3, wobei die Umweltbarriere (12) nur eine der Verbindungen umfasst, die ausgewählt ist aus Yb_{2-2γ}Gd_{2γ}SiO₅, Yb_{2-2γ}Gd_{2γ}Si₂O₇, wobei γ zwischen 0,05 und 0,15 liegt.

6. Werkstück nach einem der Ansprüche 1 bis 5, wobei die Umweltbarriere (12) einen Verdichtungsgrad größer als oder gleich wie 98 % aufweist.

7. Verfahren zum Schutz eines Substrats (11), wovon ein an eine Oberfläche (S) angrenzender Teil aus einem Material ist, das Silizium umfasst, bei der Verwendung bei hohen Temperaturen in einer oxidierenden und feuchten Umgebung, indem auf der Oberfläche des Substrats eine Umweltbarriere (12) gebildet wird,
**dadurch gekennzeichnet, dass** eine Umweltbarriere gebildet wird, die mindestens eine Verbindung umfasst, die ausgewählt ist aus Yb_{2-2γ}Gd_{2γ}SiO₅, Yb_{2-2γ}Gd_{2γ}Si₂O₇, wobei γ zwischen 0,05 und 0,15 liegt, und Aluminiumoxid (Al₂O₃) mit einem molaren Gehalt zwischen 5 und 15 %, bezogen auf die Gesamtzusammensetzung der Umweltbarriere,
wobei die Umweltbarriere bis mindestens 1400°C eine überwiegende feste Phase beibehält und bei einer Temperatur von mehr als oder gleich wie 1300 °C eine flüssige Phase aufweist, sodass die Menge an flüssiger Phase der Barriere eine Selbstheilungsfähigkeit für eine Gebrauchstemperatur von mehr als oder gleich wie 1300 °C verleiht.

8. Verfahren nach Anspruch 7, wobei die Bildung der Umweltbarriere (12) einen Schritt eines Sinterns eines Ytterbiumoxidpulvers (Yb₂O₃), eines Gadoliniumoxidpulvers (Gd₂O₃), eines Aluminiumoxidpulvers (Al₂O₃) und eines Siliziumdioxidpulvers (SiO₂) bei einer Temperatur zwischen 1300 °C und 1400 °C umfasst, wobei das Verhältnis der Pulver gewählt ist, um ein Werkstück nach einem der Ansprüche 1 bis 6 zu erlangen.

9. Verfahren nach Anspruch 7 oder 8, ferner umfassend einen Schritt eines Erlangens einer Haftschicht, die Silizium umfasst, auf der Oberfläche (S) des Substrats (11), vor der Bildung der Umweltbarriere (12).

## Claims

1. A part comprising a substrate (11) of ceramic matrix composite material, the substrate comprising silicon, the part further comprising an environmental barrier (12) formed on at least one surface (S) of the substrate,
the part being **characterized in that** the environmental barrier comprises at least one compound selected from Yb_{2-2γ}Gd_{2γ}SiO₅ and Yb_{2-2γ}Gd_{2γ}Si₂O₇, where γ is between 0.05 and 0.15,
and **in that** the environmental barrier further comprises alumina Al₂O₃, the molar alumina content being between 5% and 15% relative to the total environmental barrier composition.

2. The part according to claim 1, further comprising a bonding layer comprising silicon present between the surface (S) of the substrate (11) and the environmental barrier (12).

3. The part according to claim 1 or 2, wherein the substrate (11) is a composite material part whose matrix comprises silicon carbide.

4. The part according to claim 1 to 3, wherein the environmental barrier (12) jointly comprises the compounds Yb_{2-2γ}Gd_{2γ}SiO₅, Yb_{2-2γ}Gd_{2γ}Si₂O₇, where γ is between 0.05 and 0.15.

5. The part according to claim 1 to 3, wherein the environmental barrier (12) comprises only one of the compounds selected from Yb_{2-2γ}Gd_{2γ}SiO₅, Yb_{2-2γ}Gd_{2γ}Si₂O₇ where γ is between 0.05 and 0.15.

6. The part according to any one of claims 1 to 5, wherein the environmental barrier (12) has a densification rate greater than or equal to 98%.

7. A method for protecting a substrate (11), a portion of which adjacent to a surface S is made of a material comprising silicon, during high-temperature use in an oxidizing and humid environment, by forming an environmental barrier (12) on the substrate surface,
**characterized in that** an environmental barrier is formed which comprises at least one compound selected from Yb_{2-2γ}Gd_{2γ}SiO₅, Yb_{2-2γ}Gd_{2γ}Si₂O₇ where γ is between 0.05 and 0.15, and alumina (Al₂O₃) in a molar content of between 5% and 15% relative to the total environmental barrier composition,
the environmental barrier maintaining a majority solid phase up to at least 1400°C and presenting a liquid phase at a temperature higher than or equal to 1300°C, so that the quantity of liquid phase ensures the self-healing capacity of the barrier for a temperature of use higher than or equal to 1300°C.

8. The method of claim 7, wherein the formation of the environmental barrier (12) comprises a sintering step of ytterbium oxide powder (Yb₂O₃), gadolinium oxide powder (Gd₂O₃), an alumina powder (Al₂O₃) and a silica powder (SiO₂) at a temperature between 1300°C and 1400°C, the proportion of the powders being determined so as to obtain a part according to any one of claims 1 to 6.

9. The method according to claim 7 or 8, further comprising a step for obtaining a bonding layer comprising silicon on the surface (S) of the substrate (11), prior to the formation of the environmental barrier (12).
